# EUROPEAN PATENT SPECIFICATION

(11) **EP 3 414 213 B1**
(45) Date of publication and mention of the grant of the patent: **18.12.2019**
(21) Application number: 17705953.2
(22) Date of filing: 06.02.2017
(51) Int. Cl.: C04B 41/50, C04B 41/52

(54) **METHOD OF MANUFACTURING A PHOTOVOLTAIC CONCRETE**
VERFAHREN ZUR HERSTELLUNG EINES FOTOVOLTAIKBETONS
PROCÉDÉ POUR LA FABRICATION D'UN CIMENT PHOTOVOLTAÏQUE

(30) Priority: 09.02.2016 EP 16290031
(43) Date of publication of application: 19.12.2018
(73) Proprietor: Holcim Technology Ltd, 8645 Jona (CH)
(72) Inventor: HORGNIES, Matthieu, 38291 Saint -Quentin-Fallavier Cedex (FR); DUBOIS-BRUGGER, Isabelle, 38291 Saint-Quentin-Fallavier Cedex (FR); LEGRAND, Fabienne, 38291 Saint-Quentin-Fallavier Cedex (FR)
(74) Representative: Keschmann, Marc
(86) International application number: PCT/IB2017/000074
(87) International publication number: WO 2017/137824

(56) References cited:
- EP-A1- 2 190 032
- WO-A1-2011/132143
- WO-A1-2013/060477
- JP-A- 2015 093 269
- US-A- 5 672 214
- US-A1- 2002 114 888

## Description

The invention refers to a method of manufacturing a photovoltaic concrete.

The present invention is directed towards the technical field of the production of electricity from renewable energy sources, especially solar energy, by means of the photovoltaic effect.

The cities comprise various buildings and infrastructure (including transport) providing large surfaces, that it would be advantageous to use to produce electricity from solar energy. For this purpose, it becomes desirable to use concrete surfaces available on the many structures present in cities. However, the application of solar panels on the facades, or more generally on the concrete surfaces is time-consuming, costly and requires a large amount of manpower.

The application of photovoltaic layers on concrete has been disclosed in various documents, such as WO 2011/132143 A1, WO 2012/076491 A1, WO 2013/037792 A1, WO 2013/060477 A1 and WO 2015/189096 A1.

Further, the document EP 2190032 A1 describes a fiber cement based panel, on which a photovoltaic thin film is applied by gluing. The adhesion is effected using an adhesive applied by vacuum lamination and under heat on the fiber cement panel that has previously been coated with a polymer film.

The known processes for applying a photovoltaic layer onto concrete comprise the application of an adhesive layer between the concrete surface and the photovoltaic layer. Hot melt adhesives may be used for the adhesive layer. In order to improve the adhesion of the photovoltaic layer to the concrete, it has already been proposed in WO 2011/132143 A1, WO 2013/037792 A1, WO 2013/060477 A1 and WO 2015/189096 A1 to apply the adhesive layer on a very smooth surface of the concrete, such as a surface having a surface roughness Ra of below 1 µm. However, the adhesive strength may still not be satisfactory in some cases, because of the apparition of bubbles in the adhesive layer at the interface between the concrete and the photovoltaic layer.

Therefore, the instant invention aims at improving the adhesion between the photovoltaic layer and the concrete, in order to provide a concrete for producing buildings, structure work or infrastructure that is capable of generating electricity.

For this purpose, the present invention provides a method of manufacturing a photovoltaic concrete, comprising the steps of:
- providing a hardened concrete;
- degassing and/or drying the hardened concrete by performing a heat treatment, wherein the heat treatment comprises subjecting the hardened concrete to a temperature of ≥ 65°C in an atmosphere having a relative humidity of ≤ 10% for a period of at least 1 day, preferably at least 3 days;
- applying an adhesive layer on a surface of the hardened concrete; preferably when the temperature of the surface of hardened concrete is ≤ 60°C;
- applying a layer having photovoltaic properties onto the adhesive layer.

Surprisingly, the inventors have shown that degassing and/or drying the hardened concrete by performing a heat treatment before applying the adhesive layer considerably reduces or even prevents the formation of bubbles in the adhesive layer. In particular, it was found that a specific heat treatment is required, which comprises subjecting the hardened concrete to a temperature of ≥ 65°C for a period of at least 1 day, preferably at least 3 days. Such a heat treatment results in a degassing and/or drying of the concrete such that the emission of air and/or water during the adhesion and/or lamination process is considerably reduced. Indeed, all the experiments performed by the inventors showed that the apparition of air bubbles could not be reduced if the concrete samples were subjected to a heat treatment, wherein the samples were maintained for 3 days in a climatic chamber at a relative humidity of 50% and a temperature of only up to 60°C.

Preferably, the heat treatment comprises subjecting the hardened concrete to a temperature of 65-85°C for a period of at least 3 days.

Preferably, the heat treatment comprises subjecting the hardened concrete to a temperature of > 85°C for a period of 1-2 days.

In order to enhance the removal of water from the hardened concrete, the heat treatment preferably is performed in a ventilated furnace, wherein the relative humidity of the furnace atmosphere is preferably kept at or below 10%.

Advantageously, a smooth surface of the concrete combined with the inventive heat treatment provides a good adhesion of the photovoltaic layer. In this connection, according to a preferred embodiment of the invention, the surface of the concrete, before applying the adhesive layer, has a surface roughness Ra of < 10 µm, preferably < 7 µm, even more preferably < 5 µm, preferably 0.2 to 1 µm. Such a smooth surface may be obtained by pouring wet concrete into a mold, said mold having an inner surface for contacting the concrete having a surface roughness Ra of < 1.5 µm, wherein the inner surface preferably is made of PVC.

The term "roughness" as used herein denotes a parameter of the surface topography and is quantified by the deviations in the direction of the normal vector of a real surface from its ideal form. The roughness of a given surface can be determined by measuring a number of parameters. In the description of the instant invention, the parameter Ra is used as measured by a confocal optical profilometer and as defined by the standards NF EN 05-015 and DIN EN ISO 4287 of October 1998, corresponding to the arithmetic average of all the ordinate of the surface profile within a base length.

According to a preferred embodiment of the invention the adhesive layer is made of an elastomeric polymer, such as ethylene-vinyl acetate (EVA) or a thermoplastic polyester elastomer (TPE). The latter may be obtained from the company Dupont under the trademark Hytrel ® Film. Other hot melt adhesives may also be used. The adhesive layer may be applied by spraying or brushing.

It has been found that good results can be obtained by applying the adhesive layer in a thickness of 0.2-1 mm, preferably 0.4-0.6 mm.

It has been observed that the adhesive melts too fast upon its application onto the concrete, if the temperature of the concrete surface is too high. This results in poor adhesion quality and an undesired aesthetic appearance. Therefore, it is preferable to let the concrete surface cool before applying the adhesive layer. A preferred embodiment of the invention therefore provides that the surface of the concrete is allowed to cool to a temperature of ≤ 60°C before applying the adhesive layer.

Further, it is advantageous not to wait too long between the termination of the heat treatment of the concrete and the application of the adhesive layer. Otherwise, the concrete reabsorbs moisture from the air and the risk of obtaining bubbles in the adhesive layer is increased. According to a preferred embodiment of the invention, the adhesive layer is applied onto the surface of the hardened concrete not later than 5 minutes after having finished the heat treatment.

The photovoltaic layer can be produced by using known techniques. In particular, the layer having photovoltaic properties is made of photovoltaic cells, such as crystalline silicon solar cells or thin film solar cells. Thin film solar cells may be applied by sputtering, by chemical vapor deposition, ion deposition, by plasma deposition, electron beam physical vapor deposition, pulsed laser deposition, by molecular beam epitaxy or by thermal evaporation.

The metal or mineral compounds suitable for the photovoltaic thin layer can be based on amorphous silicon, liquid silicon, cadmium telluride, copper-indium-selenium, copper-indium-gallium-selenium, of copper-indium-gallium-diselenide-disulphide, gallium arsenide, indium tin oxide, copper, molybdenum, chalcopyrite, perovskite, or mixtures thereof.

According to a preferred embodiment, the layer having photovoltaic properties is coated with a protective layer, preferably a layer made of elastomeric polymer, such as ethylene-vinyl acetate (EVA).

Additionally, the protective layer may optionally be coated with a further protective layer, which preferably is transparent, such as a polymer film or glass.

After having applied all the layers onto the hardened concrete, a final step provides for a lamination of the layers in order to obtain a laminate. Therefore, according to a preferred embodiment, the hardened concrete, the adhesive layer, the layer having photovoltaic properties, the protective layer and optionally the further protective layer are laminated at a temperature of > 120°C, in particular at a temperature of 140-160°C. Such relatively high temperatures as required for the lamination process can result in the formation of air bubbles in the adhesive layer by air and/or water vapor being released from the hardened concrete. According to the invention, the heat treatment of the hardened concrete before the application of the adhesive layer allows for a controlled degassing and/or drying of the concrete so that high temperatures may be used during subsequent process steps, in particular for the lamination step without risking the formation of air bubbles in the adhesive layer.

The term "concrete" as used herein is understood to define a mixture of a hydraulic binder (e.g. cement), aggregate, water, optionally additives, and optionally mineral additions. Generally, any type of concrete may be used within the scope of the instant invention, in particular any structural concrete that complies with the standard NF EN 1992-1-1 of October 2005. Structural concrete generally has a compressive strength measured at 28 days of greater than or equal to 12 MPa, in particular i2-300 MPa. Such a concrete can be used as a support structure in constructional work. A support structure is generally any element carrying more than its own weight, such as, e.g., pillars, posts, floors, walls, beams etc. Examples of concretes to be used are high performance concrete, ultra-high performance concrete, self-leveling concrete, self-compacting concrete, fiber reinforced concrete, ready-mixed concrete or colored concrete. Preferably, the concrete implemented in the process of the invention is a self-leveling concrete, i.e. a concrete that it is brought under the sole effect of the gravity without being vibrated.

The term "concrete" also comprises mortars. In this case, the concrete comprises a mixture of a hydraulic binder, sand, water, and optionally additives, and possibly mineral additions. The term "concrete" denotes indistinctly concrete in the fresh state and in the cured state, and also includes a cement slurry or mortar.

The term "hydraulic binder" as used herein is understood to define a material, which sets by hydration, for example a cement.

According to a preferred embodiment of the invention, the concrete is a ultra-high performance concrete (UHPC) having a 28d compressive strength of > 100 MPa.

The concrete may generally have a water/cement ratio (W/C) of up to 50%, preferably at most 0.32, for example 0.10 to 0.32, more preferably from 0.20 to 0.27.

The concrete may be a concrete containing silica fume.

The concrete generally has a porosity to water of less than 14%, preferably less than 12%, for example less than 10% (determined by the method described in the report "Journées Techniques", AFPC-AFREM, December 1997, pages 121 to 124).

A ultra-high performance concrete is a particular type of high-performance concrete and generally has a resistance to compression at 28 days greater than 100 MPa and generally greater than 120 MPa. The layers according to the invention are preferably applied to elements produced from the ultra-high performance concretes described in the US Patents 6478867 and 6723162 or European Patent Applications 1958926 and 2072481.

The concrete preferably comprises, in parts by weight:
- 100 parts of Portland cement;
- 50 to 200 parts of a sand having a single grading with a D10 to a D90 of 0.063 to 5 mm, or a mixture of sands, the finest sand having a D10 to a D90 of 0.063 to 1 mm and the coarsest sand having a D10 to a D90 of 1 to 5 mm, for example between 1 and 4 mm;
- 0 to 70 parts of a pozzolanic or non-pozzolanic material of particles or a mixture thereof having a mean particle size less than 15 µm;
- 0.1 to 10 parts of a water-reducing superplasticizer; and
- 10 to 32 parts of water.

D90 corresponds to the 90th percentile of the particle size distribution by volume, that is to say that 90% of the particles have a size less than D90 and 10% have a size greater than D90. Likewise, D10 corresponds to the 10th percentile of the particle size distribution by volume, that is to say that 10% of the particles have a size less than D10 and 90% have a size greater than D10.

The sand is generally a silica or limestone sand, a calcined bauxite or particles of metallurgical residues, and may also comprise a ground dense mineral material, for example a ground vitrified slag. A preferred mixture of sands comprises a mixture (preferably of two sands), the finest sand having a D10 to a D90 from 0.063 to 1 mm and the coarsest sand having a D10 to a D90 from 1 to 5 mm. The concrete is preferably a self-placing concrete. It preferably has a Vicat setting time of 2 to 18 hours, for example 4 to 14 hours.

The ultra-high performance concretes generally exhibit a greater shrinkage on setting because of their higher cement content. The total shrinkage may be reduced by the inclusion of, in general from 2 to 8 parts, preferably from 3 to 5 parts, for example approximately 4 parts, of quicklime, overburnt lime or calcium oxide per 100 parts of the mixture before the addition of water.

Suitable pozzolanic materials comprise silica fume, also known under the name of microsilica, which is a by-product of the production of silicon or ferrosilicon alloys. It is known as a reactive pozzolanic material.

Its principal constituent is amorphous silicon dioxide. The individual particles generally have a size of approximately 5 to 10 nm. The individual particles agglomerate to former agglomerates of 0.1 to 1 µm, and then can aggregate together in aggregates of 20 to 30 µm. The silica fume generally has a specific surface area BET of 10 to 30 m²/g.

Other pozzolanic materials comprise materials rich in aluminosilicate such as metakaolin and natural pozzolans having volcanic, sedimentary or diagenic origins.

Suitable non-pozzolanic materials also comprise materials containing calcium carbonate (for example ground or precipitated), preferably a ground calcium carbonate. The ground calcium carbonate may for example be Durcal® 1 (OMYA, France).

The non-pozzolanic materials preferably have a mean particle size less than about 10 µm, preferably less than about 5 µm, for example 1 to 4 µm. The non-pozzolanic material may be a ground quartz, for example C800 which is a substantially non-pozzolanic silica filler material supplied by Sifraco, France.

The preferred specific surface area BET (determined by known methods) of the calcium carbonate or of the ground quartz is generally from 2 to 10 m²/g, generally less than 8 m²/g, for example 4 to 7 m²/g, preferably less than 6 m²/g. Precipitated calcium carbonate is also suitable as non-pozzolanic material. The individual particles generally have a (primary) size of the order of 20 nm. The individual particles agglomerate in aggregates having a (secondary) size of approximately 0.1 to 1 µm. The aggregates themselves form clusters having a (ternary) size greater than 1 µm.

A single non-pozzolanic material or a mixture of non-pozzolanic materials may be used, for example ground calcium carbonate, ground quartz or precipitated calcium carbonate or a mixture thereof. A mixture of pozzolanic materials or a mixture of pozzolanic and non-pozzolanic materials may also be used. The concrete treated according to the invention may be reinforced by reinforcing elements, for example metal and/or organic fibers and/or glass fibers and/or other reinforcing elements for example as described below.

The concrete may comprise metal fibers and/or organic fibers and/or glass fibers. The quantity by volume of fibers is generally from 0.5 to 8% relative to the volume of the hardened concrete. The quantity of metal fibers, expressed in terms of volume of the final hardened concrete is generally less than 4%, for example from 0.5 to 3.5%, preferably approximately 2%. The quantity of organic fibers, expressed on the same basis, is generally from 1 to 8%, preferably from 2 to 5%. The metal fibers are generally chosen from the group including steel fibers, such as high strength steel fibers, amorphous steel fibers or stainless steel fibers. The steel fibers may optionally be coated with a non-ferrous metal such as copper, zinc, nickel (or alloys thereof).

The individual length (1) of the metal fibers is generally at least 2 mm and is preferably 10 to 30 mm. The ratio l/d (d being the diameter of the fibers) is generally from 10 to 300, preferably from 30 to 300, preferably from 30 to 100.

The organic fibers comprise polyvinyl alcohol (PVA) fibers, polyacrylonitrile (PAN) fibers, fibers of polyethylene (PE), high-density polyethylene (HDPE) fibers, polypropylene (PP) fibers, homo- or copolymers, polyamide or polyimide fibers. Mixtures of these fibers may be used. The organic reinforcing fibers used in the invention may be classified as follows: high modulus reactive fibers, low modulus non-reactive fibers and low modulus reactive fibers. The presence of organic fibers makes it possible to modify the behavior of the concrete in relation to heat or fire.

The individual length of the organic fibers is preferably from 5 to 40 mm, preferably from 6 to 12 mm. The organic fibers are preferably PVA fibers.

Suitable cements are the Portland cements without silica fume described in "Lea's Chemistry of Cement and Concrete". Portland cements include slag cements, pozzolanic, fly ash, burnt shale, limestone and composite cements. A preferred cement for the invention is CEM I (generally PM ES). The cement in the concrete is for example white cement.

The water/cement weight ratio of the composition may vary if cement substitutes, more particularly pozzolanic materials, are used. The water/binder ratio is defined as the weight ratio between the quantity of water E and the sum of the quantities of cement and of all pozzolanic materials: it is generally from 13 to 35%, preferably 15 to 32%, for example 15 to 30%, most preferably from 20 to 25%. The water/binder ratio may be adjusted by using for example water reducing agents and/or superplasticizers.

In the work "Concrete Admixtures Handbook, Properties Science and Technology", V.S. Ramachandran, Noyes Publications, 1984: a water reducer is defined as an additive that reduces the quantity of water of the mixture for a concrete for a given workability of typically from 10 to 15%. Water reducers comprise for example lignosulfonates, hydroxycarboxylic acids, carbohydrates, and other specialized organic compounds, for example glycerol, polyvinyl alcohol, sodium aluminomethylsiliconate, sulfanilic acid and casein. Superplasticizers belong to a new class of water reducers, which are chemically different from the normal water reducers and capable of reducing the quantity of water of the mixture by approximately 30%. Superplasticizers have been classified generally into four groups: sulfonated naphthalene formaldehyde (SNF) condensate (generally a sodium salt); sulfonated melamine formaldehyde condensate (SMF); modified lignosulfonates (MLS) and others. New generation superplasticizers comprise polycarboxylic compounds such as polyacrylates. The superplasticizer is preferably a new generation of superplasticizer, for example a copolymer containing polyethylene glycol as graft and carboxylic functions in the main chain such as a polycarboxylic ether. Sodium polycarboxylate-polysulfonate and sodium polyacrylates may also be used. The quantity of superplasticizers generally required depends on the reactivity of the cement. The lower the reactivity of the cement, the lower the required quantity of superplasticizer. In order to reduce the total quantity of alkalis, the superplasticizer may be used as a calcium salt rather than a sodium salt.

Other additives may be added to the concrete mix, for example an anti-foam agent (for example a polydimethylsiloxane). Silicones may also be used in the form of a solution, a solid or preferably in the form of a resin, an oil or an emulsion, preferably in water. Preferred silicones comprise the characteristic groups (R⁴SiO 0.5) and (R⁴₂SiO).

In these formulae the radicals R⁴, which may be identical or different, are preferably hydrogen or an alkyl group having 1 to 8 carbon atoms, the methyl group being preferred. The number of characteristic groups is preferably from 30 to 120.

The quantity of such an agent in the composition is generally at most 5 parts per 100 parts by weight relative to the weight of the cement.

The concrete may be prepared by known methods, in particular by mixing the solid components and water, shaping (for example by moulding, casting, injection, pumping, extrusion or calendering) then setting and hardening.

The method of fabricating a concrete element as defined above comprises the steps of providing a mould, pouring the concrete in the fresh state into the mould and removing the element from the mould after the concrete has set. The filling of the mould is advantageously carried out with the mould flat.

According to an embodiment of the invention, the mould comprises a material such as silicone, polyurethane, steel, stainless steel, polypropylene, bakelized wood, polyoxymethylene or polyvinyl chloride. The mould preferably comprises polypropylene, polyoxymethylene or polyvinyl chloride.

According to an embodiment of the invention, the mould comprises polyvinyl chloride. No specific demoulding agent was used.

After the release of the hardened concrete from the mould and before the step of heat treatment, a step of storing the concrete for at least 7 days, preferably at least 10 days, even more preferably at least 12 days, is carried out. The storage is for example carried out at 20°C and at 50% relative humidity.

Preferably, the concrete is in the shape of a concrete slab having a thickness of 5-20 mm. The concrete will preferably be in the form of "thin elements", for example those having a ratio between the length and the thickness greater than approximately 8, for example greater than about 10, generally having a thickness of 10 to 30 mm.

In the mixing of the components of the concrete the materials in the form of particles other than the cement may be introduced as premixtures or dry premix of powders or dilute or concentrated aqueous suspensions.

The method according to the invention may optionally include a step of polishing the concrete surface before applying the adhesive layer.

The expression "construction element" means any element of a construction such as for example a floor, a screed, a foundation, a basement, a wall, a partition, a lining, a ceiling, a beam, a work surface, a pillar, a bridge pier, a building block, a building block made of aerated concrete, a tube, a pipeline, a post, a staircase, a panel, a cornice, a mould, a highway element (for example a curb), a tile, a covering (for example a road covering), a coating (for example for a wall), a plasterboard, an insulating element (e.g. sound and/or heat insulation).

In the present disclosure, including the claims, unless otherwise indicated, the percentages are indicated by weight.

Specific surface areas of materials are measured by the BET method using a Beckman Coulter SA 3100 apparatus with nitrogen as adsorbed gas.

Particle size distributions and particle sizes less than 0.063 mm are as measured using a Malvern MS2000 laser granulometer. Measurement is effected in ethanol. The light source consists of a red He-Ne laser (632 nm) and a blue diode (466 nm). The optical model is that of Mie and the calculation matrix is of the polydisperse type.

The apparatus is checked before each working session by means of a standard sample (Sifraco C10 silica) for which the particle size distribution is known.

Measurements are performed with the following parameters: pump speed 2300 rpm and stirrer speed 800 rpm. The sample is introduced in order to establish an obscuration between 10 and 20%. Measurement is effected after stabilisation of the obscuration. Ultrasound at 80% is first applied for 1 minute to ensure the deagglomeration of the sample. After about 30s (for possible air bubbles to clear), a measurement is carried out for 15 s (15000 analysed images). Without emptying the cell, measurement is repeated at least twice to verify the stability of the result and elimination of possible bubbles.

All values given in the description and the specified ranges correspond to average values obtained with ultrasound.

Particle size distributions and particle sizes greater than 0.063 mm are measured by sieving.

The invention will be described in greater detail by means of the following example.

### EXAMPLE

An ultra-high performance concrete with the following components was used:
(1) White Portland cement from Lafarge-France Le Teil
(2) Limestone filler DURCAL 1 from the company OMYA
(3) Silica fume MST from SEPR (European Society of Refractories Products)
(4) Sand BE01 from Sibelco France (Carrière of SIFRACO BEDOIN)
(5) Additive Ductal F2 from the company Chryso

Portland cement is of the type CEM I 52.5 according to EN 197-1 of February 2001. The silica fume has a median particle size of approximately 1 µm. The additive Ductal F2 is a polycarboxylate superplasticizer comprising a polyoxyalkylene in aqueous phase.

The following formulation was used:

| Component | wt. -% in relation to the mass of the total composition |
|---|---|
| White Portland cement | 31.0 |
| Limestone filler DURCAL 1 | 9.3 |
| Silica fume MST | 6.8 |
| Sand BE01 | 44.4 |
| Water | 7.1 |
| Additive Ductal F2 | 1.4 |

The water/cement ratio is 0.26. It is a concrete having a compressive strength at 28 days greater than 100 MPa.

The ultra-high performance concrete according to the above formulation has been obtained by means of a RAYNERI type mixer. The whole operation has been carried out at 20°C. The method of preparation comprises the following steps:
- At T = 0 seconds: charging the cement, the limestone filler, silica fume and the sand in the bowl mixer and mixing during 7 minutes (15 rpm);
- At T = 7 minutes: adding water and half of the weight of additive and mix for 1 minute (15 rpm);
- At T = 8 minutes: adding the rest of the additive and mix for 1 minute (15 rpm);
- At T = 9 minutes: mixing for 8 minutes (50 rpm); and
- At T = 17 minutes: mixing for 1 minute (15 rpm);
- At T = 18 minutes: pouring the concrete on the level into a mould.

Plates (dimensions 1700 x 100 x 10 mm) have been produced by moulding concrete according to the above process in a mould made from a polyvinyl chloride (PVC). Each plate has been demoulded 18 hours after having addition of the water to the cement. Each demoulded plate has been stored at 20°C and at a relative humidity of 60% during 14 days.

After demoulding the surface of the plates had a roughness Ra of 0.4-1 µm.

### Example of heat treatment n°1

A first half of the plates of hardened concrete were subjected to a heat treatment in a furnace at a temperature of 65°C during 3 days. During the heat treatment the furnace atmosphere was controlled so that the relative humidity did not exceed 10%.

### Example of heat treatment n°2

The second half of the plates of hardened concrete were subjected to a heat treatment in a furnace at a temperature of 85°C during 1 day. During the heat treatment the furnace atmosphere was controlled so that the relative humidity did not exceed 10%.

All the plates obtained as described above where used to produce a laminate comprising the following layers:
- hardened concrete plates
- adhesive layer made of EVA (applied to the concrete after allowing the concrete surface to cool down to 60°C)
- crystalline silicon solar cells layer
- protective layer made of EVA
- glass plate or a transparent plastics film.

The laminate was produced in a laminating device at a temperature of 150°C ± 10°C. The following laminating device was used:
- Model: TCYB01A
- Laminating zone: 2200mm x 1750mm
- Temperature uniformity: ± 2°C
- Temperature range: 30-180°C
- Air escape rate: 30 l/sec.
- Power: 35 kW
- Air source: 0.7 MPa

The adhesive layer between the concrete surface and the solar cells layer was analysed and substantially now air bubbles were found.

## Claims

1. A method of manufacturing a photovoltaic concrete, comprising the steps of:
- providing a hardened concrete;
- degassing and/or drying the hardened concrete by performing a heat treatment, wherein the heat treatment comprises subjecting the hardened concrete to a temperature of ≥ 65°C in an atmosphere having a relative humidity of ≤ 10% for a period of at least 1 day, preferably at least 3 days;
- applying an adhesive layer on a surface of the hardened concrete;
- applying a layer having photovoltaic properties onto the adhesive layer.

2. A method according to claim 1, wherein the heat treatment comprises subjecting the hardened concrete to a temperature of 65-85°C in an atmosphere having a relative humidity of ≤ 10% for a period of at least 3 days.

3. A method according to claim 1, wherein the heat treatment comprises subjecting the hardened concrete to a temperature of > 85°C in an atmosphere having a relative humidity of ≤ 10% for a period of 1-2 days.

4. A method according to claim 1, 2 or 3, wherein the heat treatment is performed in a ventilated furnace, wherein the relative humidity of the furnace atmosphere is preferably kept at or below 10%.

5. A method according to any one of claims 1 to 4, wherein the adhesive layer is made of an elastomeric polymer, such as ethylene-vinyl acetate (EVA) or a thermoplastic polyester elastomer (TPE).

6. A method according to any one of claims 1 to 5, wherein the adhesive layer is applied by spraying or brushing.

7. A method according to any one of claims 1 to 6, wherein the adhesive layer is applied in a thickness of 0.2-1 mm, preferably 0.4-0.6 mm.

8. A method according to any one of claims 1 to 7, wherein the surface of the concrete is allowed to cool to a temperature of ≤ 60°C before applying the adhesive layer.

9. A method according to any one of claims 1 to 8, wherein the surface of the concrete, before applying the adhesive layer, has a surface roughness Ra of < 10 µm, preferably < 7 µm, even more preferably < 5 µm, preferably 0.2 to 1 µm.

10. A method according to any one of claims 1 to 9, wherein the hardened concrete is obtained by pouring wet concrete into a mold, said mold having an inner surface for contacting the concrete having a surface roughness Ra of < 1.5 µm, wherein the inner surface preferably is made of polyvinyl chloride.

11. A method according to any one of claims 1 to 10, wherein layer having photovoltaic properties is made of photovoltaic cells, such as crystalline silicon solar cells or thin film solar cells.

12. A method according to any one of claims 1 to 11, wherein the layer having photovoltaic properties is coated with a protective layer, preferably a layer made of elastomeric polymer, such as ethylene-vinyl acetate (EVA).

13. A method according to claim 12, wherein the protective layer is coated with a further protective layer, which preferably is transparent, such as a polymer film or glass.

14. A method according to claim 12 or 13, wherein the hardened concrete, the adhesive layer, the layer having photovoltaic properties, the protective layer and optionally the further protective layer are laminated at a temperature of > 120°C, in particular at a temperature of 140-160°C.

15. A method according to any one of claims 1 to 14, wherein the concrete is a ultra-high performance concrete (UHPC) having a compressive strength of > 100 MPa at 28 days.

16. A method according to any one of claims 1 to 15, wherein the concrete is in the shape of a concrete slab having a thickness of 5-20 mm.

## Patentansprüche

1. Verfahren zur Herstellung eines Photovoltaikbetons, umfassend die Schritte;
- Bereitstellung eines ausgehärteten Betons;
- Entgasen und/oder Trocknen des ausgehärteten Betons durch Durchführen einer Wärmebehandlung, wobei die Wärmebehandlung das Aussetzen des ausgehärteten Betons einer Temperatur von ≥ 65°C in einer Atmosphäre mit einer relativen Luftfeuchtigkeit von ≤ 10% für einen Zeitraum von mindestens 1 Tag, vorzugsweise mindestens 3 Tagen, umfasst;
- Auftragen einer Klebeschicht auf eine Oberfläche des ausgehärteten Betons;
- Aufbringen einer Schicht mit photovoltaischen Eigenschaften auf die Klebeschicht.

2. Verfahren nach Anspruch 1, wobei die Wärmebehandlung das Unterwerfen des ausgehärteten Betons einer Temperatur von 65-85°C in einer Atmosphäre mit einer relativen Feuchtigkeit von ≤ 10% über einen Zeitraum von mindestens 3 Tage umfasst.

3. Verfahren nach Anspruch 1, wobei die Wärmebehandlung das Unterwerfen des ausgehärteten Betons einer Temperatur, von > 85°C in einer Atmosphäre mit einer relativen Feuchtigkeit von ≤ 10% über einen Zeitraum von 1-2 Tagen umfasst.

4. Verfahren nach Anspruch 1, 2 oder 3, wobei die Wärmebehandlung in einem belüfteten Ofen durchgeführt wird, wobei die relative Feuchtigkeit der Ofenatmosphäre vorzugsweise bei oder unterhalb von 10 % gehalten wird.

5. Verfahren nach einem der Ansprüche 1 bis 4, wobei die Klebeschicht aus einem elastomeren Polymer, wie z.B. Ethylen-Vinylacetat (EVA) oder einem thermoplastischen Polyesterelastomer (TPE), besteht.

6. Verfahren nach einem der Ansprüche 1 bis 5, wobei die Klebeschicht durch Sprühen oder Streichen aufgebracht wird.

7. Verfahren nach einem der Ansprüche 1 bis 6, wobei die Klebeschicht in einer Dicke von 0,2-1 mm, vorzugsweise 0,4-0,6 mm, aufgebracht wird.

8. Verfahren nach einem der Ansprüche 1 bis 7, wobei die Oberfläche des Betons vor dem Aufbringen der Klebeschicht auf eine Temperatur von ≤ 60°C abkühlen gelassen wird.

9. Ein Verfahren nach einem der Ansprüche 1 bis 8, wobei die Oberfläche des Betons, bevor die Klebstoffschicht aufgebracht wird, eine Oberflächenrauheit Ra von < 10 µm, vorzugsweise < 7 µm, noch mehr bevorzugt < 5 µm, vorzugsweise 0,2 bis 1 µm, aufweist.

10. Verfahren nach einem der Ansprüche 1 bis 9, wobei der ausgehärtete Beton durch Gießen von nassem Beton in eine Gussform erhalten wird, wobei die Gussform eine innere Oberfläche zum Kontaktieren des Betons mit einer Oberflächenrauheit Ra von mit < 15 µm aufweist, wobei die innere Oberfläche vorzugsweise aus Polyvinylchlorid besteht.

11. Verfahren nach einem der Ansprüche 1 bis 10, wobei die Schicht mit photovoltaischen Eigenschaften aus photovoltaischen Zellen wie kristallinen Siliziumsolarzellen oder Dünnschichtsolarzellen besteht.

12. Verfahren nach einem der Ansprüche 1 bis 11, wobei die Schicht mit photovoltaischen Eigenschaften mit einer Schutzschicht, vorzugsweise einer Schicht aus einem elastomeren Polymer, wie Ethylen-Vinylacetat (EVA), beschichtet wird.

13. Verfahren nach Anspruch 12, wobei die Schutzschicht mit einer weiteren Schutzschicht beschichtet wird, die vorzugsweise transparent ist, wie beispielsweise einer Polymerfolie oder einem Glas.

14. Verfahren nach Anspruch 12 oder 13, wobei der ausgehärtete Beton, die Klebeschicht, die Schicht mit photovoltaischen Eigenschaften, die Schutzschicht und gegebenenfalls die weitere Schutzschicht bei einer Temperatur von > 120°C, insbesondere bei einer Temperatur von 140-160°C, laminiert werden.

15. Verfahren nach einem der Ansprüche 1 bis 14, wobei der Beton ein Ultrahochleistungsbeton (UHPC) mit einer Druckfestigkeit von > 100 MPa nach 28 Tagen ist.

16. Verfahren nach einem der Ansprüche 1 bis 15, wobei der Beton die Form einer Betonplatte mit einer Dicke von 5-20 mm hat.

## Revendications

1. Procédé de fabrication d'un béton photovoltaïque,
comprenant les étapes consistant à :
- fournir un béton durci ;
- dégazer et/ou sécher le béton durci en effectuant un traitement thermique, dans lequel le traitement thermique consiste à soumettre le béton durci à une température ≥ 65 °C dans une atmosphère présentant une humidité relative ≤ 10 % pendant une période d'au moins 1 jour, de préférence d'au moins 3 jours ;
- appliquer une couche adhésive sur une surface du béton durci ;
- appliquer une couche à propriétés photovoltaïques sur la couche adhésive.

2. Procédé selon la revendication 1, dans lequel le traitement thermique consiste à soumettre le béton durci à une température de 65 à 85 °C dans une atmosphère présentant une humidité relative ≤ 10 % pendant une période d'au moins 3 jours.

3. Procédé selon la revendication 1, dans lequel le traitement thermique consiste à soumettre le béton durci à une température > 85 °C dans une atmosphère présentant une humidité relative ≤ 10 % pendant une période de 1 à 2 jours.

4. Procédé selon la revendication 1, 2 ou 3, dans lequel le traitement thermique est effectué dans un four ventilé,
dans lequel l'humidité relative de l'atmosphère du four est maintenue de préférence inférieure ou égale à 10 %.

5. Procédé selon l'une quelconque des revendications 1 à 4,
dans lequel la couche adhésive est constituée d'un polymère élastomère, tel que l'éthylène-acétate de vinyle (EVA) ou un élastomère de polyester thermoplastique (TPE).

6. Procédé selon l'une quelconque des revendications 1 à 5,
dans lequel la couche adhésive est appliquée par pulvérisation ou brossage.

7. Procédé selon l'une quelconque des revendications 1 à 6,
dans lequel la couche adhésive est appliquée en une épaisseur de 0,2 à 1 mm, de préférence de 0,4 à 0,6 mm.

8. Procédé selon l'une quelconque des revendications 1 à 7,
dans lequel la surface du béton est autorisée à refroidir à une température ≤ 60°C avant d'appliquer la couche adhésive.

9. Procédé selon l'une quelconque des revendications 1 à 8,
dans lequel la surface du béton, avant d'appliquer la couche adhésive, présente une rugosité de surface Ra < 10 µm, de préférence < 7 µm, encore plus préférablement < 5 µm, de préférence de 0,2 à 1 µm.

10. Procédé selon l'une quelconque des revendications 1 à 9,
dans lequel le béton durci est obtenu en versant du béton humide dans un moule, ledit moule présentant une surface intérieure pour entrer en contact avec le béton présentant une rugosité de surface Ra < 1,5 µm, dans lequel la surface intérieure est de préférence constituée de chlorure de polyvinyle.

11. Procédé selon l'une quelconque des revendications 1 à 10,
dans lequel la couche à propriétés photovoltaïques est constituée de cellules photovoltaïques, telles que des cellules solaires au silicium cristallin ou des cellules solaires à film mince.

12. Procédé selon l'une quelconque des revendications 1 à 11,
dans lequel la couche à propriétés photovoltaïques est revêtue d'une couche protectrice, de préférence d'une couche en polymère élastomère, tel que l'éthylène-acétate de vinyle (EVA).

13. Procédé selon la revendication 12, dans lequel la couche de protection est revêtue d'une couche de protection supplémentaire qui est de préférence transparente, telle qu'un film polymère ou de verre.

14. Procédé selon la revendication 12 ou 13, dans lequel le béton durci, la couche adhésive, la couche à propriétés photovoltaïques, la couche de protection et éventuellement la couche de protection supplémentaire sont stratifiées à une température > 120°C, en particulier à une température de 140 à 160°C.

15. Procédé selon l'une quelconque des revendications 1 à 14,
dans lequel le béton est un béton à ultra-haute performance (UHPC) présentant une résistance à la compression > 100 MPa à 28 jours.

16. Procédé selon l'une quelconque des revendications 1 à 15,
dans lequel le béton a la forme d'une dalle de béton présentant une épaisseur de 5 à 20 mm.
